# EUROPEAN PATENT SPECIFICATION

(11) **EP 4 105 533 B1**
(45) Date of publication and mention of the grant of the patent: **01.04.2026**
(21) Application number: 21753927.9
(22) Date of filing: 02.02.2021
(51) Int. Cl.: F02M 55/02, F02M 55/00, F02M 37/00, F02M 69/46, F16L 19/025, F16L 41/00, F16L 19/04

(54) **CONNECTION STRUCTURE FOR FUEL PRESSURE SENSOR**
VERBINDUNGSSTRUKTUR FÜR EINEN KRAFTSTOFFDRUCKSENSOR
STRUCTURE DE RACCORDEMENT POUR CAPTEUR DE PRESSION DE CARBURANT

(30) Priority: 14.02.2020 JP 2020023616
(43) Date of publication of application: 21.12.2022
(73) Proprietor: Usui Co., Ltd., Sunto-gun, Shizuoka 411-8610 (JP)
(72) Inventor: NISHIZAWA, Hiroyuki, Sunto-gun, Shizuoka 411-8610 (JP)
(74) Representative: Louis Pöhlau Lohrentz
(86) International application number: PCT/JP2021/003736
(87) International publication number: WO 2021/161850

(56) References cited:
- DE-A1- 102008 035 492
- JP-A- 2001 227 430
- JP-A- 2001 280 218
- JP-A- 2009 275 692
- JP-A- 2009 275 692
- JP-A- 2019 011 695
- JP-B2- 3 798 113
- JP-B2- 4 007 590
- US-B1- 6 186 121
- US-B1- 6 415 768

## Description

### TECHNICAL FIELD

This disclosure relates to a connection structure for a fuel pressure sensor.

### BACKGROUND ART

A connection structure for a fuel pressure sensor that connects a fuel pressure sensor to a fuel rail, so as to detect a pressure of a fuel stored in the fuel rail is known (*see* e.g., Patent Literature 1). In this connection structure for the fuel pressure sensor, a male screw formed in the fuel pressure sensor is screwed into a female screw formed in the fuel rail, so as to connect the fuel pressure sensor to the fuel rail. Also US 6 186 121 B discloses a connection structure for a fuel pressure sensor.

### CITATION LIST

### Patent Literature

Patent Literature 1: JP2019-11695A
Patent Literature 2: JP2000-345942A

### SUMMARY

### Technical Problem

In the conventional connection structure for the fuel pressure sensor, a fuel pressure detection portion and the male screw that is fastened to the fuel rail are integrated, and a conical portion formed in a leading end of the male screw (hereinafter, referred to as leading end of male screw) abuts to an abutting surface formed in a bottom surface of a female screw of the fuel rail, so as to form a sealing surface between the leading end of the male screw and the abutting surface for sealing. At this time, the male screw is screwed until a specified torque is applied, and the leading end of the male screw abuts to the abutting surface in an airtight state by applying an axial force to the leading end of the male screw at a high level, so as to maintain a sealing performance (airtightness, oil-tightness) of the sealing surface, which is metal contact. Herein, the leading end of the male screw contacts the abutting surface before a specified torque is applied, so that the sealing surface is formed before a specified torque is applied. That is, the sealing surface formed between the leading end of the male screw and the abutting surface rotates along the rotation of the male screw until a specified torque is applied to the leading end of the male screw. For this reason, the sealing surface may be shifted in the rotation direction of the male screw, which may deteriorate the sealing performance.

It is therefore the present disclosure has been made in view of the above problem. An object of the present disclosure is to provide a connection structure for a fuel pressure sensor that prevents relative rotation between the abutting surface of the fuel rail and the contact surface of the fuel pressure sensor to suppress the deterioration in the sealing performance.

### Solution to Problem

To achieve the above object, the present disclosure provides a connection structure for a fuel pressure sensor that connects a fuel pressure sensor for detecting a pressure of a fuel to a fuel rail in which the fuel to be supplied to an internal-combustion engine flows, the connection structure includes a tubular attachment boss that is formed in the fuel rail and includes a first screw portion and an abutting surface, an attachment portion that is provided in a sensor body of the fuel pressure sensor, and includes a contact surface that abuts to the abutting surface and a bearing surface provided behind the contact surface, and a nut including a second screw portion that is screwed on the first screw portion and a pressing portion that presses the bearing surface to the abutting surface by screwing the second screw portion on the first screw portion.

### Effect of the Invention

Accordingly, in the connection structure for the fuel pressure sensor according to the present disclosure, when the fuel pressure sensor is connected to the fuel rail, the relative rotation between the abutting surface of the fuel rail and the contact surface of the fuel pressure sensor is prevented, so that the deterioration in the sealing performance is suppressed.

### BRIEF DESCRIPTION OF DRAWINGS

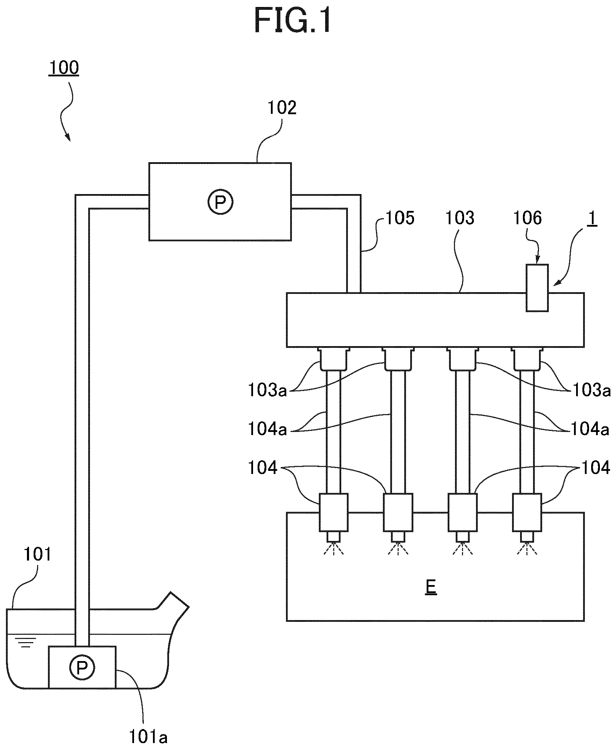

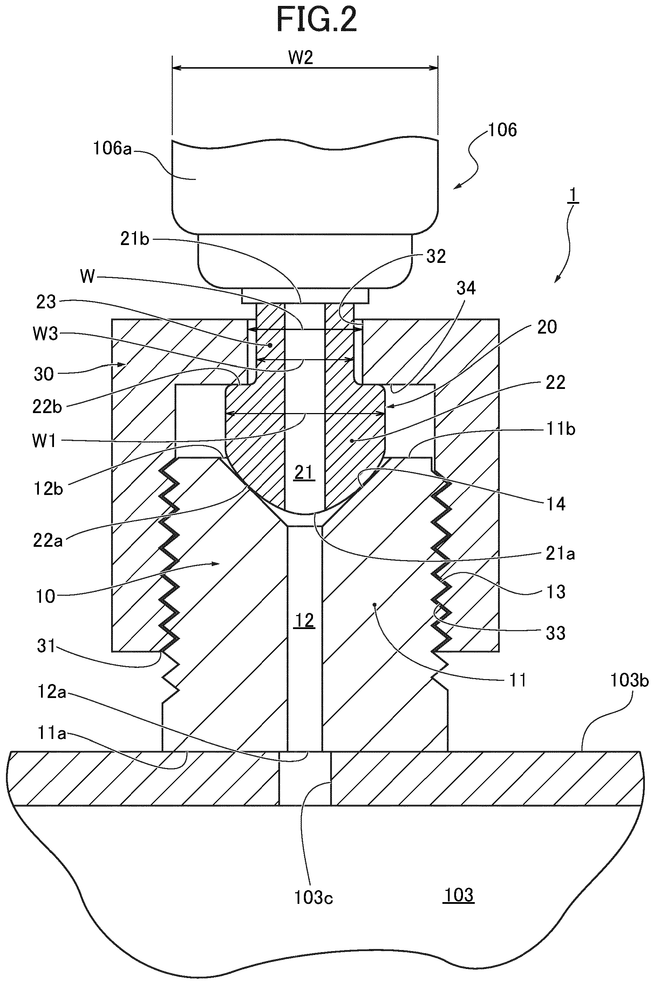

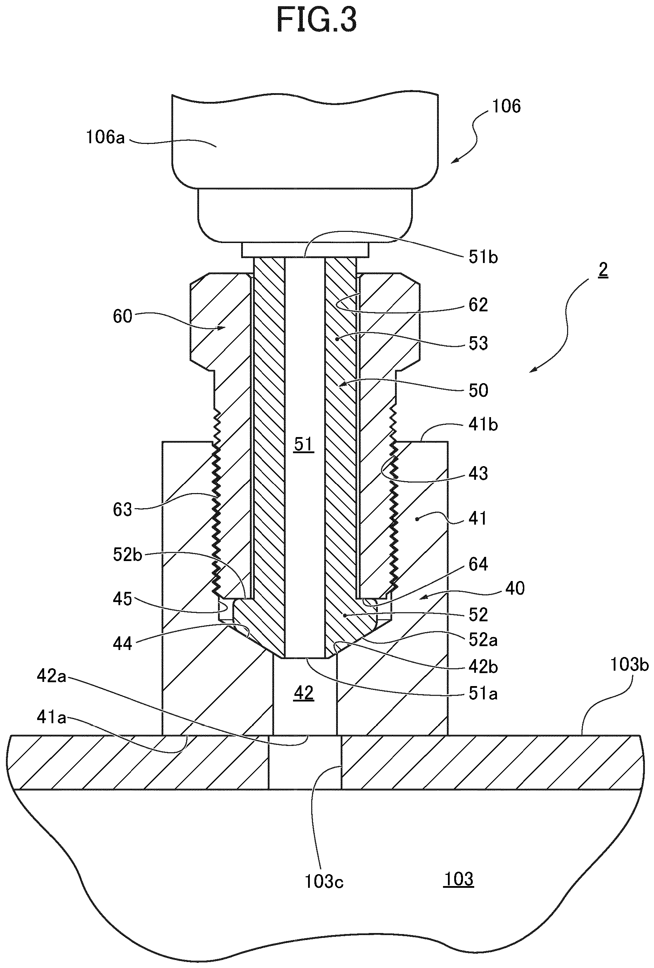

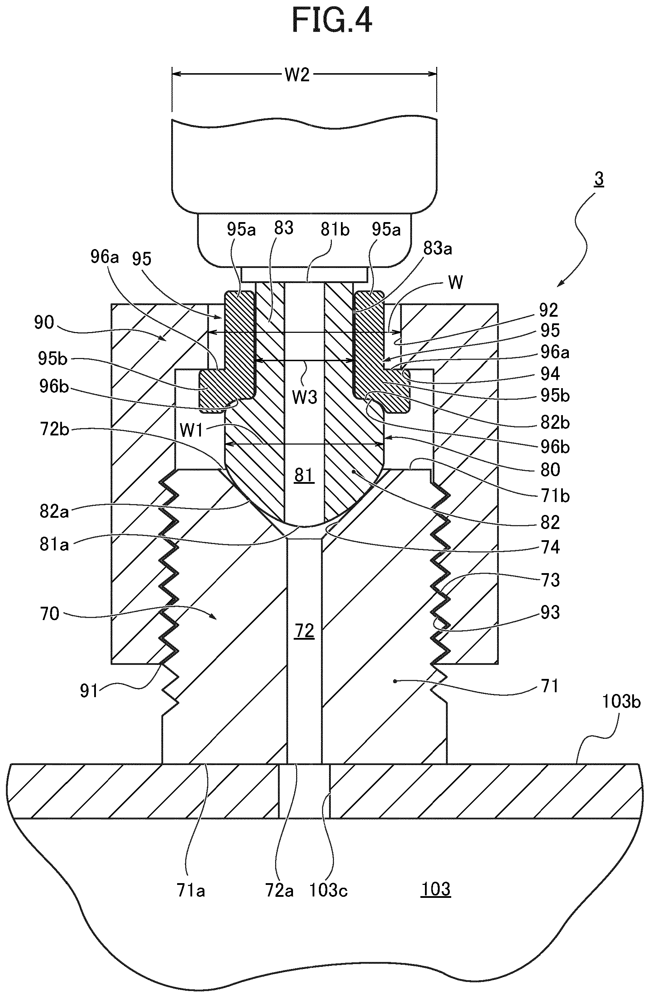

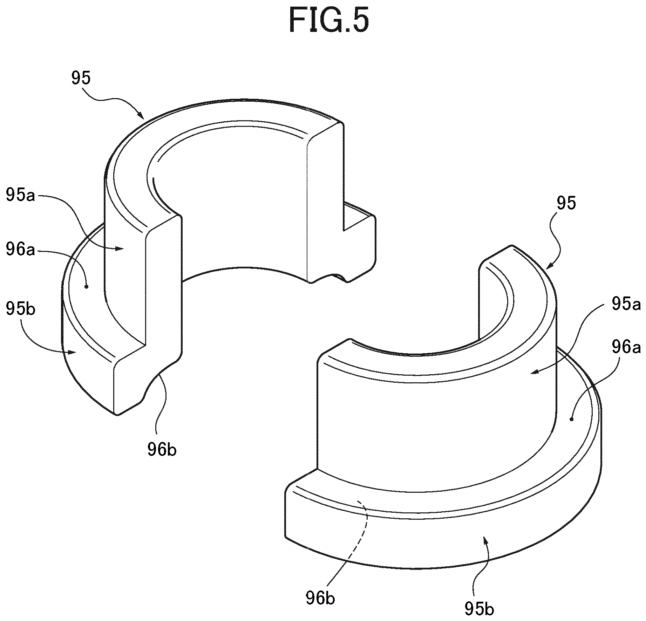

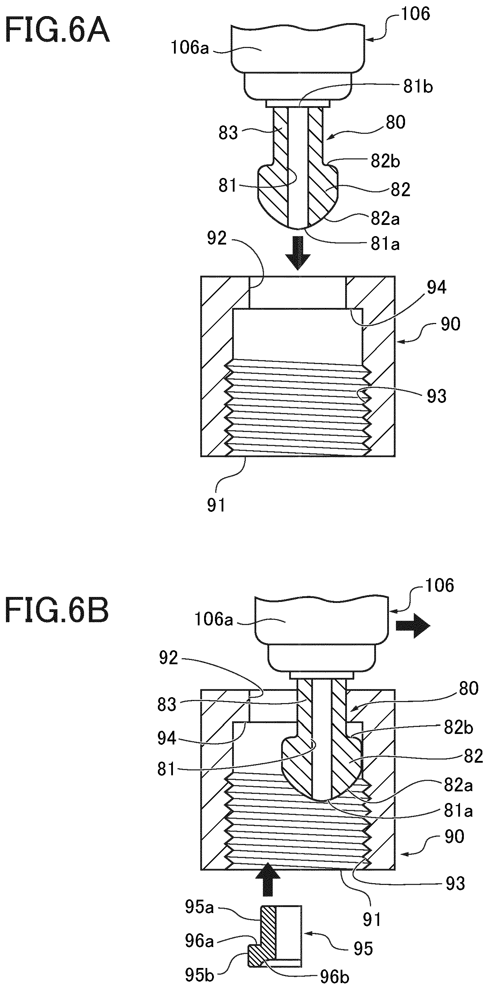

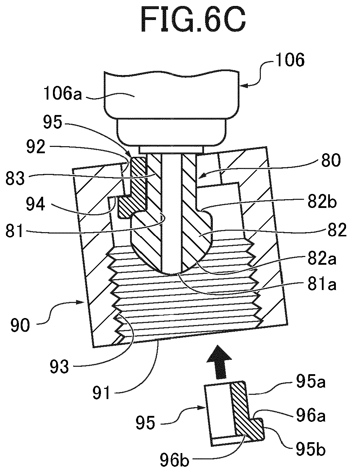

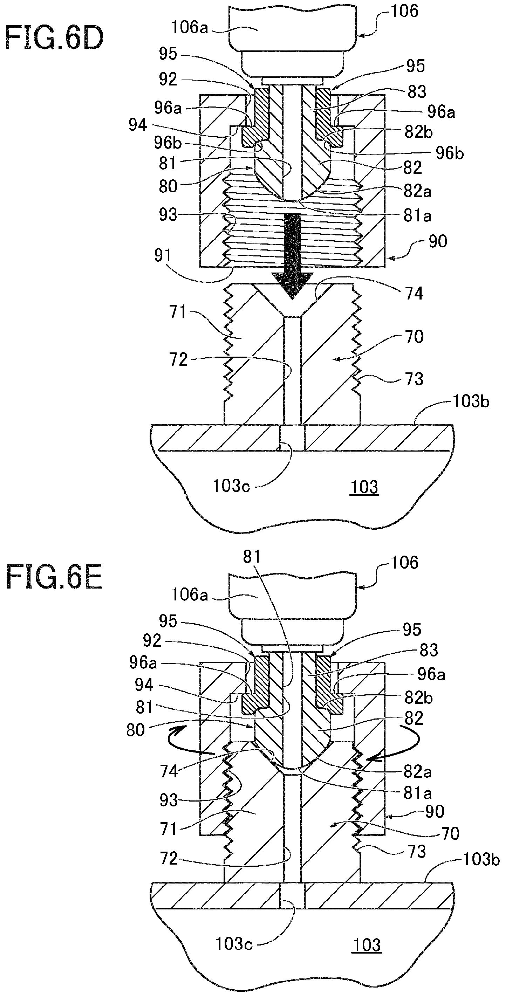

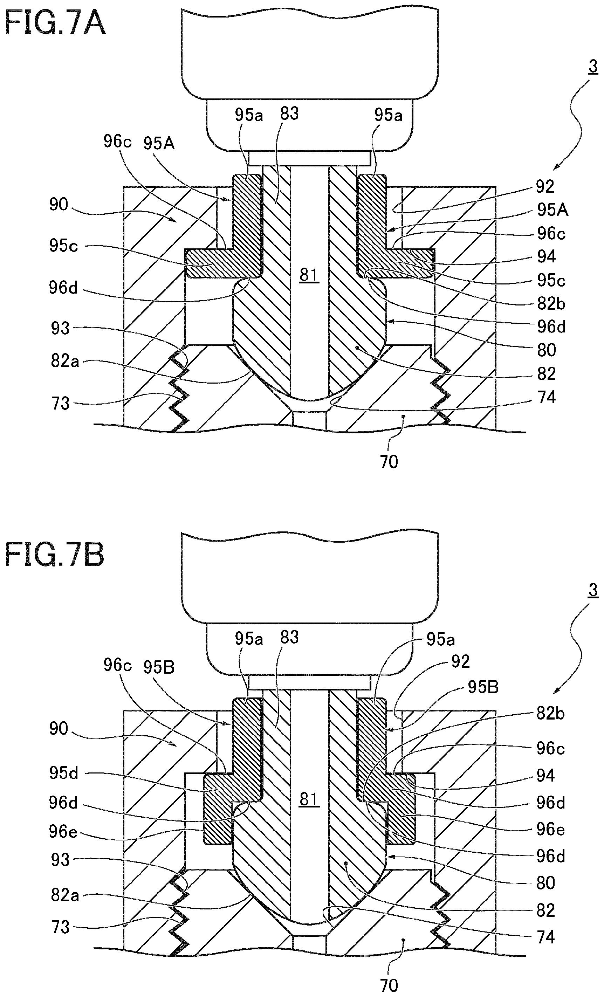

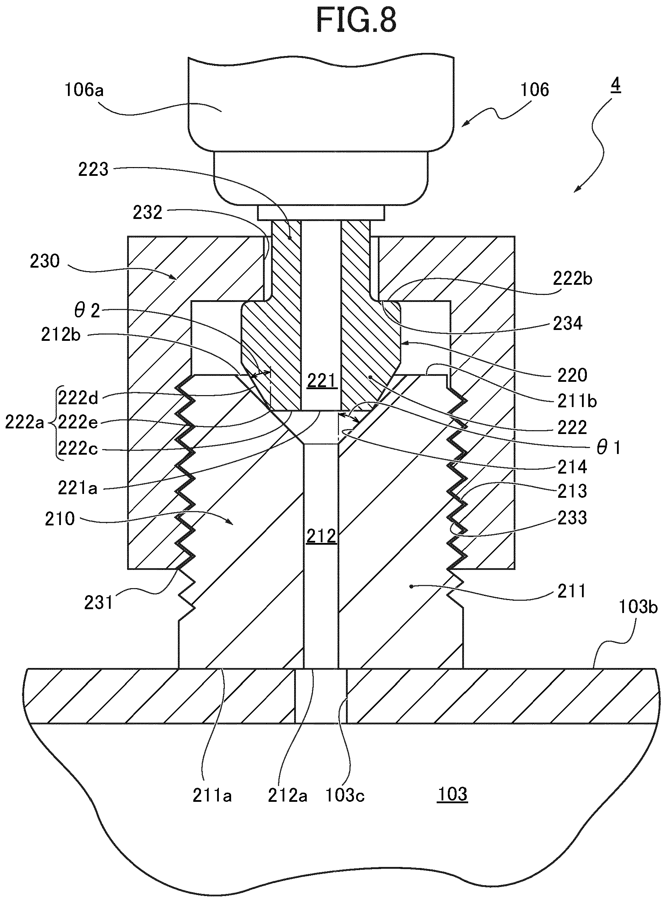

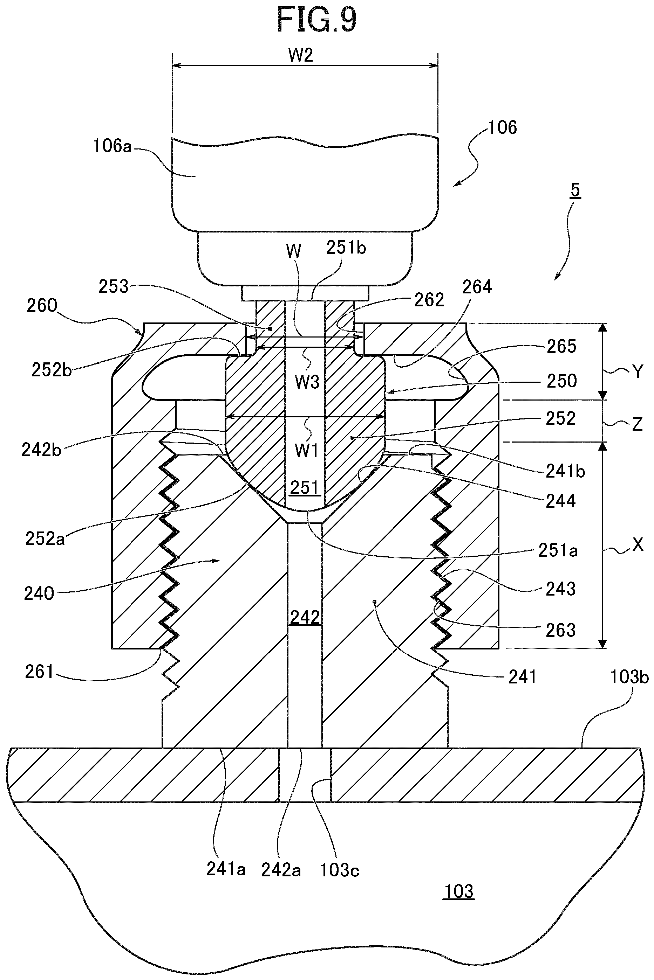

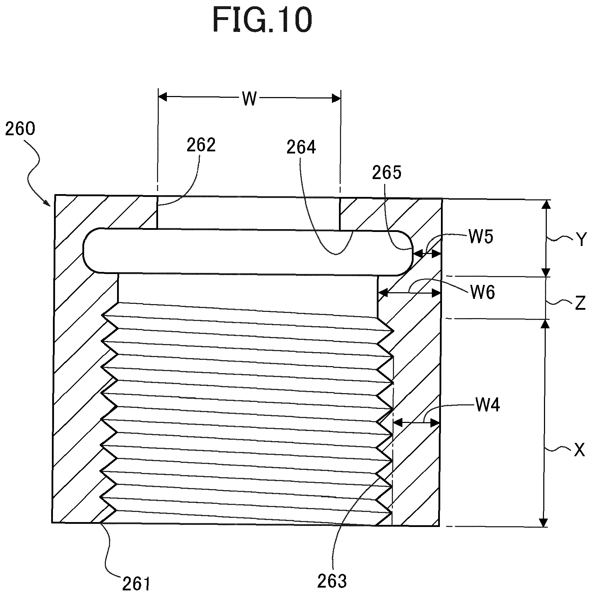

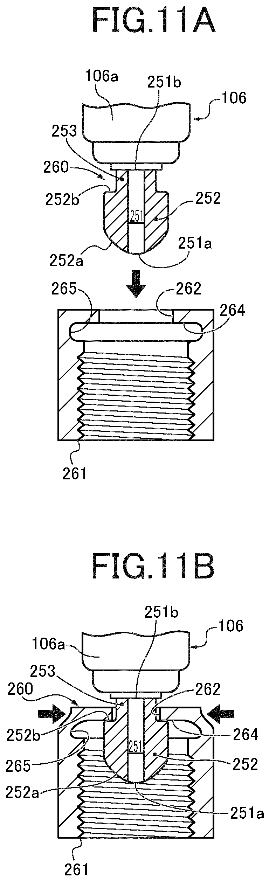

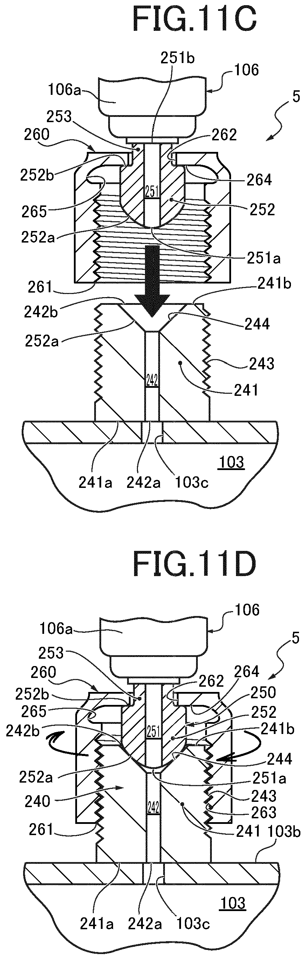

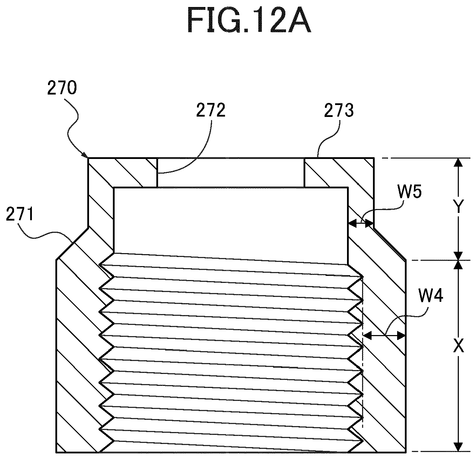

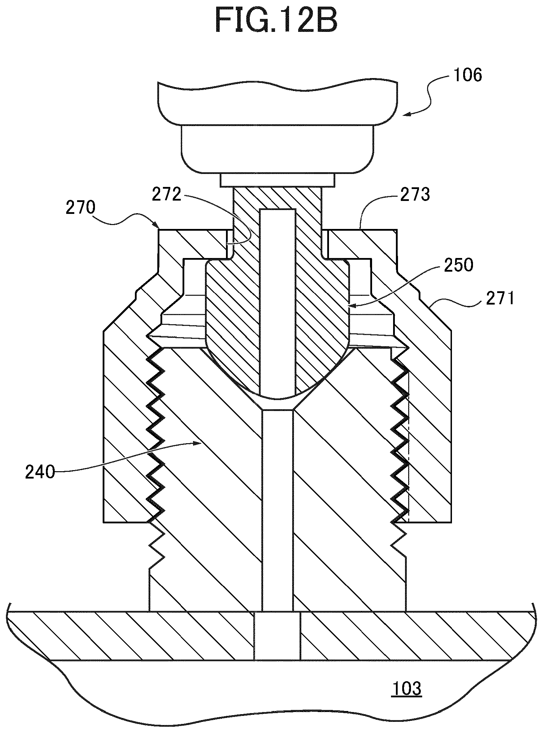

FIG. 1 is a schematic drawing illustrating a fuel supply system of an internal-combustion engine to which a connection structure for a fuel pressure sensor according to a first embodiment is applied. FIG. 2 is a sectional view illustrating the connection structure for the fuel pressure sensor according to the first embodiment. FIG. 3 is a sectional view illustrating a connection structure for a fuel pressure sensor according to a second embodiment. FIG. 4 is a sectional view illustrating a connection structure for a fuel pressure sensor according to a third embodiment. FIG. 5 is a perspective view illustrating divided collars according to the third embodiment. FIG. 6A illustrates a procedure for inserting a head portion in a connection procedure of the fuel pressure sensor according to the third embodiment. FIG. 6B illustrates a procedure for inserting a first divided collar in the connection procedure of the fuel pressure sensor according to the third embodiment. FIG. 6C illustrates a procedure for inserting a second divided collar in the connection procedure of the fuel pressure sensor according to the third embodiment. FIG. 6D is a procedure for covering a nut in the connection procedure of the fuel pressure sensor according to the third embodiment. FIG. 6E is a procedure for fixing the nut in the connection procedure of the fuel pressure sensor according to the third embodiment. FIG. 7A is a sectional view illustrating a connection structure for a fuel pressure sensor to which divided collars according to a first modified example are adapted. FIG. 7B is a sectional view illustrating a connection structure for a fuel pressure sensor to which divided collars according to a second modified example are adapted. FIG. 8 is a sectional view illustrating a connection structure for a fuel pressure sensor according to the invention. FIG. 9 is a sectional view illustrating a connection structure for a fuel pressure sensor according to a fifth embodiment. FIG. 10 is a sectional view illustrating a single nut for use in the connection structure for the fuel pressure sensor according to the fifth embodiment. FIG. 11A illustrates a procedure for inserting a head portion in a connection procedure of the fuel pressure sensor according to the fifth embodiment. FIG. 11B illustrates a procedure for swaging a nut in the connection procedure of the fuel pressure sensor according to the fifth embodiment. FIG. 11C illustrates a procedure for covering the nut in the connection procedure of the fuel pressure sensor according to the fifth embodiment. FIG. 11D illustrates a procedure for fixing the nut in the connection procedure of the fuel pressure sensor according to the fifth embodiment. FIG. 12A is a sectional view illustrating a single nut according to a modified example of the nut of the fifth embodiment. FIG. 12B is a sectional view illustrating a connection structure for a fuel pressure sensor using the modified example of the nut according of the fifth embodiment.

### DESCRIPTION OF EMBODIMENTS

Hereinafter, embodiments of a connection structure for a fuel pressure sensor according to the present disclosure will be described based on first to fifth embodiments illustrated in the figures.

### First Embodiment

A connection structure 1 for a fuel pressure sensor according to the first embodiment is adapted to a fuel supply system 100 that supplies fuel to a direct injection type engine E (internal-combustion engine) that directly injects fuel (e.g., gasoline) into a cylinder at high pressure. The fuel supply system 100 includes a fuel tank 101, a high-pressure fuel pump 102, a fuel rail 103, and an injector 104.

The fuel tank 101 is a tank in which fuel filled from the outside is stored, and is provided with a low-pressure fuel pump 101a that pumps the fuel to be transferred to the high-pressure fuel pump 102. The high-pressure fuel pump 102 presses the fuel transferred from the low-pressure fuel pump 101a with a power generated in the engine E, and supplies the high-pressure (e.g., 15 MPa or more) fuel to the fuel rail 103 through a fuel supply pipe 105.

The fuel rail 103 is a straight pipe that extends in a cylinder arrangement direction of the engine E, and stores the high-pressure fuel discharged from the high-pressure fuel pump 102. A downstream end of the fuel supply pipe 105 is connected to the fuel rail 103. The fuel rail 103 is provided with an injector attachment portion 103a. The number of the injector attachment portions 103a corresponds to the number of the cylinders of the engine E. A damper that controls the pulsation of the fuel may be provided inside the fuel rail 103.

The injector 104 is provided according to the number of the cylinders of the engine E, and is connected to the fuel rail 103 through a connection pipe 104a connected to the injector attachment portion 103a. The opening and closing of each injector 104 are controlled in an appropriate timing according to the running state of the engine E. Each injector 104 directly injects the high-pressure fuel in the fuel rail 103 into each cylinder of the engine E.

A fuel pressure sensor 106 that detects a fuel pressure in a pipe is connected to the fuel rail 103.

A configuration of the connection structure 1 for the fuel pressure sensor according to the first embodiment that connects the fuel pressure sensor 106 to the fuel rail 103 will be described with reference to FIG. 2.

The connection structure 1 for the fuel pressure sensor according to the first embodiment includes an attachment boss 10 formed in the fuel rail 103, an attachment portion 20 provided in a sensor body 106a of the fuel pressure sensor 106, and a nut 30 that fixes the fuel pressure sensor 106 to the attachment boss 10.

The attachment boss 10 includes a boss body 11, a boss internal flow channel 12, a male screw portion 13 (first screw portion) formed in an outer peripheral surface of the boss body 11, and an abutting surface 14 provided in a sensor side opening portion 12b of the boss internal flow channel 12.

The boss body 11 is a metal cylindrical member fixed to the outer peripheral surface 103b of the fuel rail 103. A first end surface 11a that contacts the fuel rail 103 of the boss body 11 curves along the outer peripheral surface 103b of the fuel rail 103, and a second end surface 11b that faces the fuel pressure sensor 106 has a flat surface. The boss body 11 is fixed to face a port 103c that penetrates through the peripheral surface of the fuel rail 103.

The boss internal flow channel 12 is a through hole that penetrates through the boss body 11 in the axial direction, and includes a rail side opening portion 12a that opens at the first end surface 11a of the boss body 11 and the sensor side opening portion 12b that opens at the second end surface 11b. The rail side opening portion 12a communicates with the port 103c formed in the fuel rail 103. The fuel inside the fuel rail 103 therefore flows into the boss internal flow channel 12 through the port 103c and the rail side opening portion 12a. The inside of the sensor side opening portion 12b has a tapered shape that inclines outside in the diameter direction from the center to the opening edge. The tapered inside of the sensor side opening portion 12b is the abutting surface 14 to which the attachment portion 20 abuts.

The attachment portion 20 is a metal member that projects from the sensor body 106a and abuts to the abutting surface 14 of the attachment boss 10. The attachment portion 20 includes inside thereof a sensor side flow channel 21 in which the fuel flows, and also includes a head portion 22 formed in a leading end facing the attachment boss 10 and an axial portion 23 that connects the head portion 22 and the sensor body 106a.

The sensor side flow channel 21 is a through hole that penetrates through the attachment portion 20 in the axial direction, and includes an inlet 21a that opens at the leading end of the head portion 22 and an outlet 21b that faces a not-shown pressure detection portion built in the sensor body 106a. The leading end of the head portion 22 is inserted into the sensor side opening portion 12b of the boss internal flow channel 12, and the inlet 21a and the sensor side opening portion 12b face to each other, so that the fuel flows into the sensor side flow channel 21. The fuel that has flowed into the sensor side flow channel 21 flows to the outlet 21b, and the pressure of the fuel is detected by the pressure detection portion built in the sensor body 106a.

The head portion 22 substantially has a mushroom shape. A leading end of the head portion 22 directed to the attachment boss 10 curves into a convex circular arc shape, and a rear surface of the head portion 22 facing the sensor body 106a is formed into a flange shape that projects in the diameter direction from the outer peripheral surface of the axial portion 23. The inlet 21a of the sensor side flow channel 21 is formed in the center of the leading end of the head portion 22. A contact surface 22a that contacts the abutting surface 14 is formed in the head portion 22 to surround the peripheral of the inlet 21a. The contact surface 22a surrounds the whole periphery of the inlet 21a. The contact between the contact surface 22a and the abutting surface 14 in an airtight state forms an annular sealing surface that surrounds the periphery of the inlet 21a between the contact surface 22a and the abutting surface 14, so as to prevent the fuel flowing into the sensor side flow channel 21 from the boss internal flow channel 12 from being leaked. On the other hand, the rear surface of the head portion 22 that faces the sensor body 106a is a bearing surface 22b provided behind the contact surface 22a.

The axial portion 23 has a cylindrical shape thinner than a maximum outer diameter W1 of the head portion 22, and is inserted into the through hole 32 of an after-described nut 30 to penetrate through the through hole 32.

The nut 30 is a bagged nut having width across flats as an external shape. The nut 30 has at a first end thereof an opening portion 31 into which the boss body 11 of the attachment boss 10 is inserted and at a second end thereof a through hole 32 through which the axial portion 23 of the attachment portion 20 penetrates. A female screw portion 33 (second screw portion) that is screwed on the male screw portion 13 of the attachment boss 10 is formed in the inner circumferential surface of the nut 30. The nut 30 has a hollow cylindrical shape in which the attachment boss 10 is inserted. A pressing portion 34 is formed in the periphery of the through hole 32.

In this case, the measurement of the through hole 32 is set such that an inner diameter W is smaller than the maximum outer diameter W1 of the head portion 22 and a maximum outer diameter W2 of the sensor body 106a, and is larger than a maximum outer diameter W3 of the axial portion 23. The pressing portion 34 formed in the periphery of the through hole 32 therefore faces the bearing surface 22b projecting in the diameter direction from the peripheral surface of the axial portion 23. The female screw portion 33 is thereby screwed on the male screw portion 13, and the nut 30 comes close to the fuel rail 103, so that the pressing portion 34 presses the bearing surface 22b toward the abutting surface 14. When the attachment portion 20 is assembled to the sensor body 106a in the fuel pressure sensor 106, the nut 30 is assembled between the sensor body 106a and the attachment portion 20.

Hereinafter, the operation of the connection structure 1 for the fuel pressure sensor according to the first embodiment will be described.

To connect the fuel pressure sensor 106 to the fuel rail 103 in the connection structure 1 for the fuel pressure sensor according to the first embodiment, at first, the nut 30 previously assembled to the fuel pressure sensor 106 is previously put on the attachment boss 10 fixed to the outer peripheral surface 103b of the fuel rail 103. Next, the nut 30 is rotated, and the female screw portion 33 formed in the inner peripheral surface of the nut 30 is screwed on the male screw portion 13 formed in the outer peripheral surface of the boss body 11, so that the nut 30 is fixed to the boss body 11. The boss body 11 is thereby inserted into the nut 30 through the opening portion 31, and the attachment portion 20 comes close to the boss body 11.

When the nut 30 is screwed until the attachment portion 20 provided in the sensor body 106a of the fuel pressure sensor 106 abuts to the boss body 11, the head portion 22 is inserted into the sensor side opening portion 12b of the boss internal flow channel 12, and the contact surface 22a contacts the abutting surface 14.

At this time, the pressing portion 34 of the nut 30 faces the bearing surface 22b of the attachment portion 20. Thus, when the nut 30 comes close the fuel rail 109 by screwing the nut 30, the axial force acts on the bearing surface 22b from the pressing portion 34. The contact surface 22a is pressed to the abutting surface 14 by this axial force, so that the sealing surface is formed. When the axial force acting on the bearing surface 22b reaches a constant force or more, the contact surface 22a is elastically deformed to contact the abutting surface 14 at an airtight state, so that the sealing performance is maintained at a high level between the contact surface 22a and the abutting surface 14. As a result, the fuel pressure sensor 106 is connected to the fuel rail 103 in an airtight state.

On the other hand, the axial portion 23 of the attachment portion 20 of the fuel pressure sensor 106 in which the contact surface 22a is formed penetrates through the through hole 32 formed in the nut 30, and the attachment portion 20 is separated from the nut 30. The nut 30 thereby rotates around the attachment portion 20 and the attachment portion 20 does not rotates when the contact surface 22a is pressed to the abutting surface 14.

As described above, in the connection structure 1 for the fuel pressure sensor according to the first embodiment, the attachment portion 20 provided in the fuel pressure sensor 106 is pressed by the nut 30 screwed on the attachment boss 10 provided in the fuel rail 103. That is, when the sealing performance is maintained by pressing the contact surface 22a to the abutting surface 14, the nut 30 that applies the axial force to the attachment portion 20 is separated from the contact surface 22a which is pressed to the abutting surface 14. With this, the contact surface 22a and the abutting surface 14 do not relatively rotate in a contact state when the fuel pressure sensor 106 is connected to the fuel rail 103. The contact surface 22a that has contacted the abutting surface 14 in an airtight state is prevented from moving in the rotation direction, and the deterioration in the sealing performance due the shift of the sealing surface can be suppressed. As a result, a stable airtight performance can be maintained between the fuel pressure sensor 106 and the fuel rail 103.

In the connection structure for the fuel pressure sensor in which the contact surface is formed in the leading end of the male screw, and the contact surface rotates when the male screw is screwed, it is necessary to secure an engagement accuracy at a high level between the male screw and the female screw formed in the fuel rail and on which the male screw is screwed, so as to reduce the relative shift between the abutting surface and the contact surface formed in the fuel rail. That is, when the engagement accuracy between the male screw and the female screw is low, the relative shift between the contact surface and the abutting surface increases, resulting in the deterioration in the sealing performance. It is thus considered that the allowable range of the machining accuracy is reduced.

However, in the connection structure 1 for the fuel pressure sensor according to the first embodiment, the attachment portion 20 having the contact surface 22a is separated from the nut 30 that applies the axial force to the attachment portion 20. The contact surface 22a thereby does not relatively rotate to the abutting surface 14. Thus, a high engagement accuracy is not required between the male screw portion 13 and the female screw portion 33, so that the allowable range of the machining accuracy can be increased.

The sealing performance between the contact surface 22a and the abutting surface 14 can be adjusted by adjusting the screwing amount of the female screw portion 33 on the male screw portion 13 to change the axial force acting on the bearing surface 22b from the pressing portion 34. The sealing performance between the contact surface 22a and the abutting surface 14 can be therefore easily adjusted, and the sealing performance can be also recovered by simply refastening the nut 30.

In the connection structure 1 for the fuel pressure sensor according to the first embodiment, the nut 30 has a hollow cylindrical shape including at one end thereof the opening portion 31 into which the attachment boss 10 is inserted and at the other end thereof the through hole 32 through which the attachment portion 20 penetrates. The pressing portion 34 is also formed in the periphery of the through hole 32. Further, the male screw portion 13 is formed in the outer peripheral surface of the boss body 11 of the attachment boss 10, and the female screw portion 33 is formed in the inner peripheral surface of the nut 30.

With this configuration, the attachment portion 20 can be connected to the attachment boss 10 with being covered by the nut 30.

In the connection structure 1 for the fuel pressure sensor according to the first embodiment, as illustrated in FIG. 2, while the leading end of the head portion 22 has a curved convex circular arc shape, the abutting surface 14 has a tapered shape that inclines outside in the diameter direction from the center to the opening edge. The narrow linear sealing surface can be formed between the contact surface 22a and the abutting surface 14.

### Second Embodiment

Hereinafter, a configuration of a connection structure 2 for a fuel pressure sensor according to the second embodiment will be described with reference to FIG. 3.

The connection structure 2 for the fuel pressure sensor according to the second embodiment includes an attachment boss 40 formed in a fuel rail 103, an attachment portion 50 provided in a sensor body 106a of a fuel pressure sensor 106, and a nut 60 that fixes the fuel pressure sensor 106 to the attachment boss 40.

The attachment boss 40 includes a boss body 41 fixed to an outer peripheral surface 103b of the fuel rail 103, a boss internal flow channel 42 formed inside the boss body 41, a concave portion 45 formed in the boss body 41, a female screw portion 43 (first screw portion) formed in an inner peripheral surface of the concave portion 45, and an abutting surface 44 formed in a bottom surface of the concave portion 45.

In the second embodiment 2, the boss internal flow channel 42 includes a rail side opening portion 42a that opens at a first end surface 41a that contacts the fuel rail 103 of the boss body 41, and a sensor side opening portion 42b that opens at the bottom surface of the concave portion 45. The rail side opening portion 42a communicates with a port 103c formed in the fuel rail 103, and the fuel in the fuel rail 103 flows into the boss internal flow channel 42 through a port 103c and the rail side opening portion 42a. The fuel that has flowed into the boss internal flow channel 42 flows to the concave portion 45 from the sensor side opening portion 42b.

The concave portion 45 is a recess that opens at a second end surface 41b of the boss body 41 facing the fuel pressure sensor 106, and extends in the axial direction of the boss body 41. The female screw portion 43 is formed in the inner peripheral surface of the concave portion 45. The attachment portion 50 and the nut 60 are inserted into the concave portion 45, and a contact surface 52a of the attachment portion 50 abuts to the bottom surface of the concave portion 45 located inside the boss body 41. The bottom surface of the concave portion 45 has a tapered shape that inclines outside in the diameter direction from the center to the second end surface 41b, and the tapered bottom surface is the abutting surface 44. The sensor side opening portion 42b of the boss internal flow channel 42 opens at the bottom surface of the concave portion 45. The boss internal flow channel 42 thus communicates with the concave portion 45, and the abutting surface 44 is formed in the periphery of the sensor side opening portion 42b.

The attachment portion 50 is a metal member that projects from the sensor body 106a, is inserted into the concave portion 45 formed in the boss body 41 of the attachment boss 40, and abuts to the abutting surface 44. The attachment portion 50 includes inside thereof a sensor side flow channel 51 in which the fuel flows, and also includes a head portion 52 formed in the leading end facing the attachment boss 40 and an axial portion 53 that connects the head portion 52 and the sensor body 106a.

The sensor side flow channel 51 is a through hole that penetrates through the attachment portion 50 in the axial direction, and includes an inlet 51a that opens at the leading end of the head portion 52 and an outlet 51b that faces a not-shown pressure detection portion built in the sensor body 106a. The leading end of the head portion 52 is inserted into the sensor side opening portion 42b of the boss internal flow channel 42, and the fuel flows into the sensor side flow channel 51. The fuel that has flowed into the sensor side flow channel 51 flows to the outlet 51b, and the pressure of the fuel is detected by the pressure detection portion built in the sensor body 106a.

The head portion 52 has a mushroom shape. A leading end of the head portion 52 directed to the attachment boss 40 includes a convex inclined surface, and a rear surface of the head portion 52 facing the sensor body 106a has a flange shape that projects in the diameter direction from the outer peripheral surface of the axial portion 53. The inlet 51a of the sensor side flow channel 51 is formed in the center of the leading end of the head portion 52, and a contact surface 52a that contacts the abutting surface 44 is formed in the head portion 52 to surround the periphery of the inlet 51a. The contact between the contact surface 52a and the abutting surface 44 in an airtight state forms an annular sealing surface that surrounds the periphery of the inlet 51a, and prevents the fuel flowing into the sensor side flow channel 51 from the boss internal flow channel 42 from being leaked. On the other hand, the rear surface of the head portion 52 facing the sensor body 106a is a bearing surface 52b located behind the contact surface 52a.

The axial portion 53 has a cylindrical shape thinner than the maximum diameter of the head portion 52, and is inserted into the through hole 62 of the nut 60 to penetrate through the through hole 62.

The nut 60 has a hollow cylindrical shape in which a through hole 62 extending in the axial direction is formed and a male screw portion 63 (second screw portion) is formed in the outer peripheral surface. This nut 60 includes in a leading end thereof a pressing portion 64 that is inserted into the concave portion 45 of the attachment boss 40.

The pressing portion 64 is provided in the periphery of the through hole 62 through which the axial portion 53 of the attachment portion 50 penetrates, and faces the bearing surface 52b projecting in the axial direction from the peripheral surface of the axial portion 53. As the pressing portion 64 faces the bearing surface 52b, the male screw portion 63 is screwed on the female screw portion 43, and the nut 60 is inserted into the concave portion 45 of the attachment boss 40, so that the pressing portion 64 presses the bearing surface 52b toward the abutting surface 44. In the fuel pressure sensor 106, when the attachment portion 50 is assembled to the sensor body 106a, the nut 60 is assembled between the sensor body 106a and the attachment portion 50.

Hereinafter, the connection structure 2 for the fuel pressure sensor according to the second embodiment will be described.

To connect the fuel pressure sensor 106 to the fuel rail 103 in the connection structure 2 for the fuel pressure sensor according to the second embodiment 2, at first, the head portion 52 of the attachment portion 50 of the fuel pressure sensor 106 faces the concave portion 45 formed in the boss body 41 of the attachment boss 40. Next, the head portion 52 and the nut 60 previously assembled to the fuel pressure sensor 106 are inserted into the concave portion 45, and the male screw portion 63 is screwed on the female screw portion 43 formed in the inner peripheral surface of the concave portion 45 by rotating the nut 60.

At this time, the pressing portion 64 of the nut 60 contacts the bearing surface 52b of the head portion 52. The bearing surface 52b is therefore pressed by screwing the nut 60, so that the axial force in the direction toward the fuel rail 103 acts to the bearing surface 52b from the pressing portion 64. The head portion 52 is pushed into the concave portion 45 by this axial force, and the contact surface 52a is pressed to the abutting surface 44. When the axial force acting on the bearing surface 52b reaches a constant force or more, the contact surface 52a is elastically deformed to contact the abutting surface 44 at an airtight state, and a sealing performance is maintained at a high level between the contact surface 52a and the abutting surface 44. As a result, the fuel pressure sensor 106 is connected to the fuel rail 103 in an airtight state.

**In** the connection structure 2 for the fuel pressure sensor according to the second embodiment, the nut 60 that applies the axial force to the attachment portion 50 is also separated from the contact surface 52a that is pressed to the abutting surface 44 With this configuration, when the fuel pressure sensor 106 is connected to the fuel rail 103, the contact surface 52a and the abutting surface 44 do not relatively rotate in a contact state, so that the deterioration in the sealing performance due to the shift of the sealing surface by the movement of the contact surface 52a that has contacted the abutting surface 44 in an airtight state can be suppressed.

In the connection structure 2 for the fuel pressure sensor according to the second embodiment, the female screw portion 43 is formed in the inner peripheral surface of the attachment boss 40, and the attachment boss 40 includes the concave portion 45 into which the attachment portion 50 and the nut 60 are inserted, and the attachment boss 40 has in the bottom surface thereof the abutting surface 44. The boss internal flow channel 42 communicates with the concave portion 45, and the nut 60 has a hollow cylindrical shape that opens at both ends. The attachment portion 50 penetrates through the nut 60. The male screw portion 63 is formed in the outer peripheral surface of the nut 60. The nut 60 includes in the leading end thereof inserted into the concave portion 45 the pressing portion 64.

The attachment portion 50 can be thereby connected to the attachment boss 40 with the nut 60 being inserted into the attachment boss 40.

In the connection structure 2 for the fuel pressure sensor according to the second embodiment, as illustrated in FIG. 3, the inclination angle of the abutting surface 44 relative to the pressing direction (vertical direction) of the bearing surface 52b by the nut 60 and the inclination angle of the contact surface 52a relative the pressing direction (vertical direction) of the bearing surface 52b are set to be substantially equal. A radially wide sealing surface can be thereby formed between the contact surface 52a and the abutting surface 44.

### Third Embodiment

Hereinafter, a configuration of a connection structure 3 for a fuel pressure sensor according to the third embodiment will be described with reference to FIGS. 4, 5.

The connection structure 3 for the fuel pressure sensor according to the third embodiment includes an attachment boss 70 formed in a fuel rail 103, an attachment portion 80 provided in a sensor body 106a of a fuel pressure sensor 106, and a nut 90 that fixes the fuel pressure sensor 106 to the attachment boss 70.

The attachment boss 70 includes a boss body 71 fixed to an outer peripheral surface 103b of the fuel rail 103, a boss internal flow channel 72 formed inside the boss body 71, a male screw portion 73 (first screw portion) formed in the outer peripheral surface of the boss body 71, and an abutting surface 74 formed in a sensor side opening portion 72b of the boss internal flow channel 72.

In the third embodiment, the boss internal flow channel 72 includes a rail side opening portion 72a that opens at a first end surface 71a that contacts the fuel rail 103 of the boss body 71, and a sensor side opening portion 72b that opens at a second end surface 71b of the boss body 71. The rail side opening portion 72a communicates with a port 103c formed in the fuel rail 103, and the fuel in the fuel rail 103 flows into the boss internal flow channel 72 through a port 103c and the rail side opening portion 72a. The inside of the sensor side opening portion 72b has a tapered shape that gradually inclines to the opening edge toward the outside in the diameter direction. The tapered inside of the sensor side opening portion 72b is an abutting surface 74.

The attachment portion 80 is a metal member that projects from the sensor body 106a, and abuts to the abutting surface 74 of the attachment boss 70. This attachment portion 80 includes inside thereof a sensor side flow channel 81 in which the fuel flows, and also includes a head portion 82 formed in the leading end that faces the attachment boss 70 and an axial portion 83 that connects the head portion 82 and the sensor body 106a.

The sensor side flow channel 81 is a through hole that penetrates through the attachment portion 80 in the axial direction, and includes an inlet 81a that opens at the leading end of the head portion 82 and an exit 81b that faces a not-shown pressure detection portion built in the sensor body 106a. The leading end of the head portion 82 is inserted into the sensor side opening portion 72b of the boss internal flow channel 72, and the fuel flows in the sensor side flow channel 81. The fuel that has flowed in the sensor side flow channel 81 flows to the exit 81b, and the pressure of the fuel is detected by the pressure detection portion built in the sensor body 106a.

The head portion 82 has a mushroom shape. A leading end of the head portion 82 that faces the attachment boss 70 has a curved convex circular arc shape and a rear surface of the head portion 82 that faces the sensor body 106a has a flange shape projecting in the diameter direction from the outer peripheral surface of the axial portion 83. The inlet 81a of the sensor side flow channel 81 is formed in the center of the leading end of the head portion 82, and a contact surface 82a that abuts to the abutting surface 74 is formed in the head portion 82 to surround the peripheral of the inlet 81a. The contact surface 82a surrounds the whole peripheral of the inlet 81a. The contact between the contact surface 82a and the abutting surface 74 in an airtight state forms an annular sealing surface that surrounds the peripheral of the inlet 81a between the contact surface 82a and the abutting surface 74 to prevent the fuel that flows in the sensor side flow channel 81 from the boss internal flow channel 72 from being leaked. On the other hand, the rear surface of the head portion 82 that faces the sensor body 106a is a bearing surface 82b provided behind the contact surface 82a.

The axial portion 83 has a cylindrical shape thinner than a maximum outer diameter W1 of the head portion 82, and is inserted into the through hole 92 of the nut 90 to penetrate through the through hole 92.

The nut 90 is a bagged nut having width across flats (typically, hexagon) as an external shape. The nut 60 has at one end thereof an opening portion 91 into which the boss body 71 of the attachment boss 70 is inserted and at the other end thereof a through hole 92 through which the axial portion 83 of the attachment portion 80 penetrates. A female screw portion 93 (second screw portion) that screws on a male screw portion 73 of the attachment boss 70 is formed in the inner peripheral surface of the nut 90. A pressing portion 94 is formed in the periphery of the through hole 92.

The measurement of the through hole 92 is set such that an inner diameter W is smaller than a maximum outer diameter W2 of the sensor body 106a and is larger than a maximum outer diameter W1 of the head portion 82 and a maximum outer diameter W3 of the axial portion 83. The attachment portion 80 can thereby penetrate through the through hole 92. In the third embodiment, a plurality (herein two) of divided collars 95 arranged side by side without a space are provided between the pressing portion 94 and the bearing surface 82b in the peripheral direction of the attachment portion 80.

As illustrated in FIG. 5, the two divided collars 95 have a cylindrical shape when end faces arranged side by side in the circumferential direction contact, and surround the periphery of the attachment portion 80. Each of the divided collars 95 includes a tubular portion 95a and a flange portion 95b.

The tubular portion 95a curves into a circular arc shape along the outer peripheral surface 83a of the axial portion 83 of the attachment portion 80, and covers the outer peripheral surface 83a of the axial portion 83. The inner diameter of the space surrounded by the two tubular portions 95a when the two divided collars 95 contact is slightly larger than the maximum outer diameter W3 of the axial portion 83, and the axial portion 83 penetrates through the space surrounded by the two tubular portions 95a. The cylindrical portion formed by the two divided collars 95 has the maximum outer diameter smaller than the inner diameter W of the through hole 92 and can be inserted into the through hole 92.

The flange portion 95b projects in the diameter direction from the end portion of the tubular portion 95a on the head portion 82 side, and is sandwiched between the pressing portion 94 and the bearing surface 82b. The flange portion 95b includes a first surface 96a that contacts the pressing portion 94 and a second surface 96b that contacts the bearing surface 82b. The first surface 96a is formed into a flat surface orthogonal to the tubular portion 95a, and the second surface 96b is formed into a curved surface along the bearing surface 82b.

Hereinafter, a connection procedure of the fuel pressure sensor 106 in the connection structure 3 for the fuel pressure sensor according to the third embodiment will be described with reference to FIGS. 6A to 6E.

To connect the fuel pressure sensor 106 to the fuel rail 103 in the connection structure 3 for the fuel pressure sensor according to the third embodiment, at first, as illustrated in FIG. 6A, the attachment portion 80 provided in the fuel pressure sensor 106 faces the through hole 92 of the nut 90. Next, the head portion 82 of the attachment portion 80 is inserted inside the nut 90 through the through hole 92.

The maximum outer diameter W1 of the head portion 82 is smaller than the inner diameter W of the through hole 92. The attachment portion 80 can be therefore easily inserted inside the nut 90.

As illustrated in FIG. 6B, after the head portion 82 is inserted inside the nut 90, the attachment portion 80 is offset from the center of the through hole 92, and a part of the space between the head portion 82 and the inner peripheral surface of the nut 90 is increased. One of the divided collars 95 is inserted inside the nut 90 from the tubular portion 95a through the opening portion 91 in the increased space.

As illustrated in FIG. 6C, after the flange portion 95b of one of the divided collars 95 contacts the pressing portion 94, the attachment portion 80 is moved to the center of the through hole 92, the flange portion 95b is sandwiched between the pressing portion 94 and the bearing surface 82b, and one of the divided collars 95 is held to prevent from falling from the nut 90.

Next, the other of the divided collars 95 is inserted inside the nut 90 from the tubular portion 95a through the opening portion 91 in the space between the head portion 82 and the inner peripheral surface of the nut 90. At this time, the other of the divided collar 95 is inserted by inclining the nut 90 and the other of the divided collars 95. The flange portion 95b of the other of the divided collars 95 thereby contacts the pressing portion 94, and the flange portion 95b of the other of the divided collars 95 is sandwiched between the pressing portion 94 and the bearing surface 82b.

The two divided collars 95 are housed between the attachment portion 80 and the nut 90, so that the flange portion 95b is sandwiched between the pressing portion 94 and the bearing surface 82b to be held in the nut 90. After the two divided collars 95 are housed in the nut 90, as illustrated in FIG. 6D, the nut 90 is put on the attachment boss 70. As illustrated in FIG. 6E, the female screw portion 93 formed in the inner peripheral surface of the nut 90 is screwed on the male screw portion 73 formed in the outer peripheral surface of the boss body 71, and the nut 90 is fixed to the boss body 71. The boss body 71 is thereby inserted into the nut 90 through the opening portion 91, and the attachment portion 80 comes close to the boss body 71.

When the nut 90 is further screwed until the attachment portion 80 of the fuel pressure sensor 106 abuts to the boss body 71, the head portion 82 is inserted into the sensor side opening portion 72b of the boss internal flow channel 72, and the contact surface 82a contacts the abutting surface 74.

At this time, the pressing portion 94 of the nut 90 faces the first surface 96a of the divided collar 95. Accordingly, when the nut 90 comes close to the fuel rail 103 by screwing the nut 90, the axial force in the direction toward the fuel rail 103 acts on the first surface 96a from the pressing portion 94. On the other hand, the second surface 96b of the divided collar 95 contacts the bearing surface 82b of the attachment portion 80. Accordingly, the axial force acting on the first surface 96a from the pressing portion 94 acts on the bearing surface 82b through the second surface 96b of the divided collar 95. The contact surface 82a is thereby pressed to the abutting surface 74, and the contact surface 82a is elastically deformed to contact the abutting surface 74 in an airtight state when the axial force acting on the bearing surface 82b reaches a constant force or more. A sealing performance is thereby secured between the contact surface 82a and the abutting surface 74 at a high level. As a result, the fuel pressure sensor 106 is connected to the fuel rail 103 in an airtight state.

Hereinafter, the operation in the connection structure 3 for the fuel pressure sensor according to the third embodiment will be described.

As described above, in the connection structure 3 for the fuel pressure sensor according to the third embodiment, the attachment portion 80 provided in the fuel pressure sensor 106 is pressed by the nut 90 that is screwed on the attachment boss 70 formed in the fuel pressure rail 103. That is, when securing the sealing performance by pressing the contact surface 82a to the abutting surface 74, the nut 90 that applies the axial force to the attachment portion 80 is separated from the contact surface 82a that is pressed to the abutting surface 74. With this configuration, when the fuel pressure sensor 106 is connected to the fuel rail 103, the contact surface 82a and the abutting surface 74 do not relatively rotate in a contact state. Thus, the contact surface 82a that has contacted the abutting surface 74 is prevented from moving in the rotation direction, so that the deterioration in the sealing performance due to the shift of the sealing surface can be suppressed. As a result, a stable airtight performance can be secured between the fuel pressure sensor 106 and the fuel rail 103.

In the third embodiment, the inner diameter W of the through hole 92 formed in the nut 90 is set to be larger than the maximum outer diameter W1 of the head portion 82 which is the maximum outer diameter of the attachment portion 80. As illustrated in FIG. 6A, the nut 90 can be thereby post-assembled to the fuel pressure sensor 106, and the nut 90 can be selected according to the shape of the attachment boss 70, for example.

In the third embodiment, the two divided collars 95 arranged side by side in the circumference direction are provided between the pressing portion 94 of the nut 90 and the bearing surface 82b of the attachment portion 80. With this configuration, the axial force can be applied to the bearing surface 82b from the pressing portion 94 while preventing the nut 90 from falling from the attachment portion 80 of the fuel pressure sensor 106. The contact surface 82a can be thereby appropriately pressed to the abutting surface 74, and a required sealing performance can be maintained.

Further, in the third embodiment, the divided collar 95 includes the tubular portion 95a that covers the outer peripheral surface 83a of the axial portion 83 of the attachment portion 80 and the flange portion 95b that projects from the tubular portion 95a and is sandwiched between the pressing portion 94 and the bearing surface 82b. Accordingly, when the divided collar 95 moves in the diameter direction, the tubular portion 95a interferes with the axial portion 83 of the attachment portion 80, so that the movement of the divided collar 95 can be suppressed. Thus, the position of the flange portion 95b sandwiched between the pressing portion 94 and the bearing surface 82b is stabilized, and the flange portion 95b can be prevented from falling between the pressing portion 94 and the bearing surface 82b.

The third embodiment shows the example in which the flange portion 95b of the divided collar 95 that is sandwiched between the pressing portion 94 and the bearing surface 82b includes the first surface 96a formed into a flat surface orthogonal to the tubular portion 95a and the second surface 96b formed into the curved surface along the bearing surface 52b. However, the shape of the flange portion 95b of the divided collar 95 is not limited thereto. For example, as a flange portion 95c of a divided collar 95A according to a first modified example illustrated in FIG. 7A, both of a first surface 96c that contacts the pressing portion 94 and a second surface 96d that contacts the bearing surface 82b may be formed in a flat surface orthogonal to the tubular portion 95a.

Further, as a flange portion 95d of a divided collar 95B according to a second modified example illustrated in FIG. 7B, the rim portion of the flange portion 95d may be bent into a crank shape, and the flange portion 95d may include a peripheral wall portion 96e that surrounds the periphery of the head portion 82. In this case, when the divided collar 95B moves in the diameter direction, the tubular portion 95a interferes with the axial portion 83, and the peripheral wall portion 96e interferes with the head portion 82. The movement of the divided collar 95B can be thereby further appropriately suppressed. In addition, in the divided collar 95B according to the second modified example, both of the first surface 96c that contacts the pressing portion 94 and the second surface 96d that contacts the bearing surface 82b may be formed in a flat surface orthogonal to the tubular portion 95a, or the second surface 96d may be formed in a curved surface along the bearing surface 82b.

### Fourth Embodiment

Hereinafter, a configuration of a connection structure for a fuel pressure sensor according to the fourth embodiment will be described with reference to FIG. 8.

The connection structure 4 for a fuel pressure sensor according to the fourth embodiment includes an attachment boss 210 formed in a fuel rail 103, an attachment portion 202 provided in a sensor body 106a of a fuel pressure sensor 106, and a nut 230 that fixes the fuel pressure sensor 106 to the attachment boss 210.

The attachment boss 210 includes a boss body 211 fixed to an outer peripheral surface 103b of the fuel rail 103, a boss internal flow channel 212 formed inside the boss body 211, a male screw portion 213 (first screw portion) formed in the outer peripheral surface of the boss body 211, and an abutting surface 214 formed in a sensor side opening portion 212b of the boss internal flow channel 212.

The inside of the sensor side opening portion 212b of the boss internal flow channel 212 that opens at a second end surface 211b of the boss body 211 has a tapered shape that inclines outside in the diameter direction from the center to the opening edge. The tapered inside of the sensor side opening portion 212b is the abutting surface 214. The rail side opening portion 212a of the boss internal flow channel 212 that opens at a first end surface 211a of the boss body 211 communicates with a port 103c formed in the fuel rail 103.

The attachment portion 220 is a metal member that projects from the sensor body 106a and abuts to the abutting surface 214 of the attachment boss 210. The attachment portion 220 has inside thereof a sensor side flow channel 221 in which the fuel flows, and includes a head portion 222 formed in the leading end facing the attachment boss 210, and an axial portion 223 that connects the head portion 222 and the sensor body 106a.

The head portion 222 has a mushroom shape. A leading end of the head portion 222 directed to the attachment boss 210 has a convex inclined surface and a rear surface of the head portion 222 that faces the sensor body 106a is formed into a flange shape projecting from the outer peripheral surface of the axial portion 223 in the diameter direction. An inlet 221a of the sensor side flow channel 221 is formed in the center of the leading end of the head portion 222. A contact surface 222a that is inserted into the sensor side opening portion 212b of the boss internal flow channel 212 and contacts the abutting surface 214 is formed in the head portion 222 to surround the periphery of the inlet 221a.

The contact surface 222a formed in the leading end of the head portion 222 includes a flat surface 222c and an inclined surface 222d that surrounds the periphery of the flat surface 222c. The flat surface 222c is a circular plane having the inlet 221a of the sensor side flow channel 221 as the center, and faces the boss internal flow channel 212. The inclined surface 222d is a surface that surrounds the whole periphery of the flat surface 222c and inclines outside in the diameter direction from the flat surface 222c toward the axial portion 223. The contact between the contact surface 222a and the abutting surface 214 in an airtight state forms an annular sealing surface that surrounds the periphery of the inlet 221a between the contact surface 222a and the abutting surface 214, which prevents the fuel flowing in the sensor side flow channel 221 from the boss internal flow channel 212 from being leaked. On the other hand, the rear surface facing the sensor body 106a of the head portion 222 is a bearing surface 222b provided behind the contact surface 222a.

The nut 230 is a bagged nut having width across flats (typically, hexagon) as an external shape. The nut 230 includes at one end thereof an opening portion 231 into which the boss body 211 of the attachment boss 210 is inserted and at the other end thereof a through hole 232 through which the axial portion 223 of the attachment portion 220 penetrates. A female screw portion 233 (second screw portion) that screws on the male screw portion 213 of the attachment boss 210 is formed in the inner peripheral surface of the nut 230. A pressing portion 234 is formed in the periphery of the through hole 232.

According to the invention, the abutting surface 214 has a tapered shape that inclines outside in the diameter direction from the center to the opening edge. The inclined surface 222d of the contact surface 222a formed in the leading end of the head portion 222 has a surface that inclines outside in the diameter direction toward the axial portion 223. Both of the abutting surface 214 and the inclined surface 222d incline in the pressing direction (vertical direction) of the bearing surface 222b by the nut 230. As illustrated in FIG. 8, the inclination angle θ1 of the bearing surface 222b relative to the pressing direction (vertical direction) of the abutting surface 214 is larger than an inclination angle θ2 of the bearing surface 222b relative to the pressing direction (vertical direction) of the inclined surface 222d.

Hereinafter, the operation of the connection structure 4 for the fuel pressure sensor according to the fourth embodiment will be described.

To connect the fuel pressure sensor 106 to the fuel rail 103 in the connection structure 4 for the fuel pressure sensor according to the fourth embodiment, the nut 230 is screwed to the attachment boss 210 formed in the fuel rail 103, and the attachment portion 220 provided in the fuel pressure sensor 106 is pressed by the nut 230. The axial force thereby acts on the bearing surface 222b of the attachment portion 220 from the pressing portion 234 of the nut 230, and the contact surface 222a is pressed to the abutting surface 214 by the axial force, so that the sealing surface is formed. As a result, the fuel pressure sensor 106 is connected to the fuel rail 103 in an airtight state.

According to the invention, the contact surface 222a that is pressed to the abutting surface 214 includes the flat surface having the inlet 221a of the sensor side flow channel 221 as the center and the inclined surface 222d that inclines outside in the diameter direction from the flat surface 222c to the axial portion 223. The inclination angle θ1 of the abutting surface 214 relative to the pressing direction (vertical direction) of the bearing surface 222b is larger than the inclination angle θ2 of the inclined surface 222d relative to the pressing direction (vertical direction) of the bearing surface 222b.

The abutting surface 214 therefore has an inclination gentler than that of the inclined surface 222d. The border line (hereinafter, border portion 222e) between the flat surface 222c that is the leading end of the inclined surface 222d and the inclined surface 222d in the contact surface 222a contacts the abutting surface 214. The contact area between the abutting surface 214 and the contact surface 22a can be thereby reduced, and the narrow liner sealing surface can be formed between the contact surface 222a and the abutting surface 214. The deterioration in the sealing performance due to the variations in the shapes of the abutting surface 214 and the contact surface 222a can be suppressed. The axal force acting on the contact surface 222a can be also concentrated in the border portion 222e, so that the elastic deformation of the contact surface 222a is improved, and the sealing performance between the contact surface 222a and the abutting surface 214 can be further enhanced.

In the connection structure 4 for the fuel pressure sensor according to the fourth embodiment illustrated in FIG. 8, the male screw portion 213 is formed in the outer peripheral surface of the boss body 211 of the attachment boss 210, and the female screw portion 233 is formed in the inner peripheral surface of the bagged nut 230. However, in the connection structure for the fuel pressure sensor that forms the female screw portion in the inner peripheral surface of the attachment boss having the concave portion, and presses the attachment portion by screwing the nut into the concave portion of the attachment boss as shown in the second embodiment, for example, the inclination angle θ1 of the abutting surface 214 relative to the pressing direction may be set to be larger than the inclination angle θ2 of the inclined surface 222d relative to the pressing direction. In this case, the border portion 222e of the border line between the flat surface 222c and the inclined surface 222d can also contact the abutting surface, and the deterioration in the sealing performance due to the variations in the shape can be prevented by forming the liner sealing surface.

### Fifth Embodiment

A configuration of a connection structure 5 for a fuel pressure sensor according to the fifth embodiment will be described with reference to FIG. 9.

The connection structure 5 for the fuel pressure sensor according to the fifth embodiment includes an attachment boss 240 formed in the fuel rail 103, an attachment portion 250 provided in a sensor body 106a of the fuel pressure sensor 106, and a nut 260 that fixes the fuel pressure sensor 106 to the attachment boss 240.

The attachment boss 240 includes a boss body 241 fixed to an outer peripheral surface 103b of the fuel rail 103, a boss internal flow channel 242 formed inside a boss body 241, a male screw portion 243 (first screw portion) formed in the outer peripheral surface of the boss body 241, and an abutting surface 244 formed in the sensor side opening portion 242b of the boss internal flow channel 242.

The boss internal flow channel 242 includes a rail side opening portion 242a that opens at a first end surface 241a that contacts the fuel rail 103 of the boss body 241 and a sensor side opening portion 242b that opens at a second end surface 241b of the boss body 241. The inside of the sensor side opening portion 242b has a tapered shape that inclines outside in the diameter direction from the center to the opening edge. The tapered inside of the sensor side opening portion 242b is an abutting surface 244.

The attachment portion 250 is a metal member that projects from the sensor body 106a and abuts to the abutting surface 244 of the attachment boss 240. The attachment portion 250 includes inside thereof a sensor side flow channel 251 in which the fuel flows, and also includes a head portion 252 formed in the leading end facing the attachment boss 240 and an axial portion 253 that connects the head portion 252 and the sensor body 106a.

The sensor side flow channel 251 is a through hole that penetrates through the attachment portion 250 in the axial direction, and includes an inlet 251a that opens at the leading end of the head portion 252 and an outlet 251b that faces a not shown pressure detection portion built in the sensor body 106a. The leading end of the head portion 252 is inserted into the sensor side opening portion 242b of the boss internal flow channel 242.

The head portion 252 has a mushroom shape. A leading end of the head portion 252 directed to the attachment boss 240 is curved into a convex circular arc shape, and a rear surface of the head portion 252 facing the sensor body 106a has a flange shape that projects from the outer peripheral surface of the axial portion 253 in the diameter direction. An inlet 251a of the sensor side flow channel 251 is formed in the center of the leading end of the head portion 252, and a contact surface 252a that contacts the abutting surface 244 is formed in the head portion 252 to surround the periphery of the inlet 251a. The contact surface 252a surrounds the whole periphery of the inlet 251a. The contact between the contact surface 252a and the abutting surface 244 in an airtight state forms an annular sealing surface that surrounds the periphery of the inlet 251a between the contact surface 252a and the abutting surface 244, which prevents the fuel flowing in the sensor side flow channel 251 from the boss internal flow channel 242 from being leaked. On the other hand, the rear surface facing the sensor body 106a of the head portion 252 is a bearing surface 252b provided behind the contact surface 252a.

The axial portion 253 has a cylindrical shape narrower than a maximum outer diameter W1 of the head portion 252, and is inserted into the through hole 262 of the nut 260 to penetrate through the through hole 262.

The nut 260 is a bagged nut having width across flats (typically, hexagon) as an external shape, and has at one end thereof an opening portion 261 into which the boss body 241 of the attachment boss 240 is inserted and at the other end thereof a through hole 262 through which the axial portion 253 of the attachment portion 250 penetrates. A female screw portion 263 (second screw portion) that screws on the male screw portion 243 of the attachment boss 240 is formed in the inner peripheral surface of the nut 260. The nut 260 has a hollow cylindrical shape into which the attachment boss 240 is inserted. A pressing portion 264 is formed in the periphery of the through hole 262.

The female screw portion 263 is formed in a region from the opening portion 261 at one end of the nut 260 to the intermediate position in the axial direction. The region in which the female screw portion 263 is formed is referred to as "screw machined portion X". On the other hand, the nut 260 has a swaging portion Y in a region near the other end of the nut 260 in which the through hole 262 is formed, and has a thickness portion Z between the screw machined portion X and the swaging portion Y.

The swaging portion Y is a region that is elastically deformed in the inner diameter direction in the assembled state to the fuel pressure sensor 106 illustrated in FIG. 9. A dent portion 265 in which the inner peripheral surface of the nut 260 is annularly dented is formed in the swaging portion Y. The swaging portion Y has a thickness W5 thinner than a thickness W4 of the screw machined portion X when assembled to the fuel pressure sensor 106 illustrated in FIG. 9 and before being assembled to the fuel pressure sensor 106 illustrated in FIG. 10 (single nut).

The thickness portion Z is an area whose rigidity is increased by setting a thickness W6 to be thicker than the thickness W5 of the swaging portion Y, and by the absence of the female screw portion 263.

The through hole 262 has a size that can retain the attachment portion 250. The through hole 262 has an inner diameter W smaller than the maximum outer diameter W1 of the head portion 252 and the maximum outer diameter W2 of the sensor body 106a, and larger than the maximum outer diameter W3 of the axial portion 253.

The inner diameter W of the through hole 262 is smaller than the maximum outer diameter W2 of the sensor body 106a, and larger than the maximum outer diameter W1 of the head portion 252 and the maximum outer diameter W3 of the axial portion 253 in the single nut illustrated in FIG. 10. The attachment portion 250 can penetrate through the through hole 262. That is, the through hole 262 is formed by reducing the opening portion having a size through which the attachment portion 250 penetrates to the size that can retain the attachment portion 250 with the elastic deformation of the swaging portion Y.

The pressing portion 264 formed in the periphery of the through hole 262 thereby faces the bearing surface 252b projecting in the diameter direction from the peripheral surface of the axial portion 253. The female screw portion 263 is screwed on the male screw portion 243, and the nut 260 comes close to the fuel rail 103, so that the pressing portion 264 presses the bearing surface 252b to the abutting surface 244.

Hereinafter, the connection procedure of the fuel pressure sensor 106 in the connection structure 5 for the fuel pressure sensor according to the fifth embodiment will be described with reference to FIGS. 11A to 11D.

To connect the fuel pressure sensor 106 to the fuel rail 103 in the connection structure 5 for the fuel pressure sensor according to the fifth embodiment, at first, the attachment portion 250 provided in the fuel pressure sensor 106 faces the through hole 262 of the nut 260, as illustrated in FIG. 11A. Next, the head portion 252 of the attachment portion 250 is inserted into the nut 260 through the through hole 262.

In the single nut before being assembled to the fuel pressure sensor 106, the inner diameter W of the through hole 262 is larger than the maximum outer diameter W1 of the head portion 252. The attachment portion 250 can penetrate through the through hole 262. With this, the attachment portion 250 can be easily inserted inside the nut 260.

After the head portion 252 is inserted inside the nut 260, the swaging portion Y of the nut 260 is swaged as illustrated in FIG. 11B. In addition, "swaging" is meant to reduce a diameter with the elastic deformation by pressing the swaging portion Y in the inner diameter direction from the periphery. At this time, the through hole 262 is reduced by swaging the swaging portion Y to deform the nut 260 to reach the inner diameter W of the through hole 262 smaller than the maximum outer diameter W1 of the head portion 252 and a size capable of retaining the attachment portion 250. As a result, the nut 260 is prevented from falling from the attachment portion 250 through the through hole 262. At this time, the deformation of the female screw portion 263 in the inner diameter direction is controlled by the thickness portion Z.

As illustrated in FIG. 11C, after the swaging portion Y of the nut 260 is swaged, the nut 260 is put on the attachment boss 240. Next, as illustrated in FIG. 11D, the nut 260 is rotated, and the female screw portion 263 formed in the inner peripheral surface of the nut 260 is screwed on the male screw portion 243 formed in the outer peripheral surface of the boss body 241, and the nut 260 is fixed to the boss body 241. The boss body 241 is thereby inserted into the nut 260 through the opening portion 261, and the attachment portion 250 abuts to the boss body 241.

At this time, the head portion 252 is inserted into the sensor side opening portion 242b of the boss internal flow channel 242, and the contact surface 252a contacts the abutting surface 244. The pressing portion 264 of the nut 260 contacts the bearing surface 252b of the attachment portion 250, and applies the axial force in the direction toward the fuel rail 103 on the bearing surface 252b. The contact surface 252a is thereby pressed to the abutting surface 244, and the contact surface 252a is elastically deformed to contact the abutting surface 244 in an airtight state when the axial force acting on the bearing surface 252b reaches a constant force or more, so that the sealing performance can be maintained between the contact surface 252a and the abutting surface 244 at a high level. As a result, the fuel pressure sensor 106 is connected to the fuel rail 103 in an airtight state.

Hereinafter, the operation in the connection structure 5 for the fuel pressure sensor according to the fifth embodiment will be described.

As described above, in the connection structure 5 for the fuel pressure sensor according to the fifth embodiment, in the single nut 260, the inner diameter W of the through hole 262 is set to be larger than the maximum outer diameter W1 of the head portion 252 that is the maximum outer diameter of the attachment portion 250. As illustrated in FIG. 11A, the nut 260 can be thereby post-assembled to the fuel pressure sensor 106, and the nut 260 can be selected according to the shape of the attachment boss 240, for example.

In the fifth embodiment, the nut 260 includes, in the region from the other end of the nut 260 in which the through hole 262 is formed to the screw machined portion X, the swaging portion Y having the thickness W5 thinner than the thickness W4 of the screw machined portion X and elastically deformed in the inner diameter direction. On the other hand, the through hole 262 is formed by reducing the opening portion having a size through which the attachment portion 250 penetrates to the size capable of retaining the attachment portion 250 with the elastic deformation of the swaging portion Y. The nut 260 can be thus prevented from falling from the attachment portion 250. The axial force can be thereby transferred from the nut 260 to the attachment portion 250 without using the divided collars as the third embodiment, and the increase in the number of components can be prevented. As the thickness W5 of the swaging portion Y is thinner than the thickness W4 of the screw machined portion X, the swaging portion Y can be appropriately swaged when swaging the swaging portion Y.

As described above, the connection structure for the fuel pressure sensor according to the present disclosure is described with reference to the first to fifth embodiments. However, the embodiment is not limited to thereto. Any change in a design and addition should be allowed as long as they do not depart from the gist of the invention according to each claim.

The third embodiment shows the example in which the two divided collars are arranged side by side in the circumference direction between the pressing portion 94 and the bearing surface 82b without a space therebetween. However, a plurality of divided collars 95 may be arranged between the pressing portion 94 and the bearing surface 82b, and the axial force acting in the direction toward the fuel rail 103 from the pressing portion 94 may act on the bearing surface 82b. In this case, three or more divided collars 95 may be arranged, and a space may be provided between the divided collars 95.

The fifth embodiment shows the example in which the dent portion 265 is formed in the inner peripheral surface of the nut 260, and the thickness W5 of the swaging portion is set to be thinner than the thickness W4 of the screw machined portion X. However, the embodiment is not limited thereto. For example, as a nut 270 illustrated in FIG. 12A, the thickness W5 can set to thinner than the thickness W4 of the screw machined portion X by forming a recess portion 271 on the outer peripheral surface of the nut 270 in the swaging portion Y.

In this case, when the swaging portion Y is swaged, the end surface 273 in which the through hole 272 is formed and the portion between the recess portion 271 and the end surface 273 in the swaging portion Y are gradually elastically deformed. As a result, as illustrated in FIG. 12B, the level difference is formed in the peripheral surface of the nut 270.

## Claims

1. A connection structure for a fuel pressure sensor (106) that connects a fuel pressure sensor (106) for detecting a pressure of a fuel to a fuel rail (103) in which the fuel to be supplied to an internal-combustion engine flows, the connection structure comprising:
a tubular attachment boss (10, 40, 70, 210, 240) that is formed in the fuel rail (103) and includes a first screw portion (13, 43, 73, 213, 243) and an abutting surface (14, 44, 74, 214, 244);
an attachment portion (20, 50, 80, 220, 250) that is provided in a sensor body (106a) of the fuel pressure sensor (106), and includes a contact surface (22a, 52a, 82a, 222a, 252a) that abuts to the abutting surface (14, 44, 74, 214, 244) and a bearing surface (22b, 52b, 82b, 222b, 252b) provided behind the contact surface (22a, 52a, 82a, 222a, 252a); and
a nut (30, 60, 90, 230, 260, 270) including a second screw portion (23, 63, 93, 233, 263) that is screwed on the first screw portion (13, 43, 73, 213, 243) and a pressing portion (34, 64, 94, 234, 264) that presses the bearing surface (22b, 52b, 82b, 222b, 252b) to the abutting surface (14, 44, 74, 214, 244) by screwing the second screw portion (23, 63, 93, 233, 263) on the first screw portion (13, 43, 73, 213, 243),
wherein the abutting surface (14, 44, 74, 214, 244) and the contact surface (22a, 52a, 82a, 222a, 252a) incline to a pressing direction of the bearing surface (22b, 52b, 82b, 222b, 252b),
**characterized in that** an inclination angle (θ1) of the abutting surface (14, 44, 74, 214, 244) relative to the pressing direction is larger than an inclination angle (θ2) of the contact surface (22a, 52a, 82a, 222a, 252a) relative to the pressing direction.

2. The connection structure for the fuel pressure sensor (106) according to claim 1, wherein
the nut (30, 60, 90, 230, 260, 270) has a cylindrical shape including at one end thereof an opening portion (31, 91, 231, 261) into which the attachment boss (10, 40, 70, 210, 240) is inserted and at the other end thereof a through hole (32, 62, 92, 232, 262, 272) through which the attachment portion (20, 50, 80, 220, 250) penetrates, and the pressing portion (34, 64, 94, 234, 264) being formed in a periphery of the through hole (32, 62, 92, 232, 262, 272),
the first screw portion (13, 43, 73, 213, 243) is formed in an outer peripheral surface of the attachment boss (10, 40, 70, 210, 240), and
the second screw portion (23, 63, 93, 233, 263) is formed in an inner peripheral surface of the nut (30, 60, 90, 230, 260, 270).

3. The connection structure for the fuel pressure sensor (106) according to claim 2, wherein
the through hole (32, 62, 92, 232, 262, 272) has an inner diameter larger than a maximum outer diameter of the attachment portion (20, 50, 80, 220, 250), and
a plurality of divided collars (95) arranged side by side in a circumference direction are provided between the pressing portion (34, 64, 94, 234, 264) and the bearing surface (22b, 52b, 82b, 222b, 252b).

4. The connection structure for the fuel pressure sensor (106) according to claim 3, wherein
The divided collar (95) includes a tubular portion (95a) that covers an outer peripheral surface of the attachment portion (20, 50, 80, 220, 250) and a flange portion (95b) that projects from an outer peripheral surface of the tubular portion (95a) and is sandwiched between the pressing portion (34, 64, 94, 234, 264) and the bearing surface (22b, 52b, 82b, 222b, 252b).

5. The connection structure for the fuel pressure sensor (106) according to claim 2, wherein
the second screw portion (23, 63, 93, 233, 263) is formed in a region from the one end of the nut (30, 60, 90, 230, 260, 270) to an intermediate position in an axial direction,
the nut (30, 60, 90, 230, 260, 270) includes, in a region from the other end to a screw machined portion (X) in which the second screw portion (23, 63, 93, 233, 263) is formed, a swaging portion (Y) that has a thickness (W5) thinner than that of the screw machined portion (X) and is elastically deformed in an inner diameter direction, and
the through hole (32, 62, 92, 232, 262, 272) is formed by reducing an opening portion (31, 91, 231, 261) having a size into which the attachment portion (20, 50, 80, 220, 250) is inserted to a size that retains the attachment portion (20, 50, 80, 220, 250) with elastic deformation of the swaging portion (Y).

6. The connection structure for the fuel pressure sensor (106) according to claim 1, wherein
the attachment boss (10, 40, 70, 210, 240) includes a concave portion (45) into which the attachment portion (20, 50, 80, 220, 250) and the nut (30, 60, 90, 230, 260, 270) are inserted [0044], the concave portion (45) including an inner peripheral surface in which the first screw portion (13, 43, 73, 213, 243) is formed and a bottom surface having the abutting surface (14, 44, 74, 214, 244), and
the nut (30, 60, 90, 230, 260, 270) includes a cylindrical shape through which the attachment portion (20, 50, 80, 220, 250) penetrates, the nut (30, 60, 90, 230, 260, 270) including an outer peripheral surface in which the second screw portion (23, 63, 93, 233, 263) is formed, and a leading end inserted into the concave portion (45), the leading end having the pressing portion (34, 64, 94, 234, 264).

## Patentansprüche

1. Verbindungsstruktur für einen Kraftstoffdrucksensor (106), die einen Kraftstoffdrucksensor (106) zum Detektieren eines Drucks eines Kraftstoffs mit einer Kraftstoffleitung (103) verbindet, in der der einem Verbrennungsmotor zuzuführende Kraftstoff fließt, wobei die Verbindungsstruktur umfasst:
einen rohrförmigen Befestigungsvorsprung (10, 40, 70, 210, 240), der in der Kraftstoffleitung (103) ausgebildet ist und einen ersten Schraubenabschnitt (13, 43, 73, 213, 243) und eine Anlagefläche (14, 44, 74, 214, 244) aufweist;
einen Befestigungsabschnitt (20, 50, 80, 220, 250), der in einem Sensorkörper (106a) des Kraftstoffdrucksensors (106) vorgesehen ist und eine Kontaktfläche (22a, 52a, 82a, 222a, 252a), die an der Anlagefläche (14, 44, 74, 214, 244) anliegt, und eine hinter der Kontaktfläche (22a, 52a, 82a, 222a, 252a) vorgesehene Lagerfläche (22b, 52b, 82b, 222b, 252b) aufweist; und
eine Schraubenmutter (30, 60, 90, 230, 260, 270) umfassend einen zweiten Schraubenabschnitt (23, 63, 93, 233, 263), der auf den ersten Schraubenabschnitt (13, 43, 73, 213, 243) geschraubt ist, und einen Druckabschnitt (34, 64, 94, 234, 264), der durch Schrauben des zweiten Schraubenabschnitts (23, 63, 93, 233, 263) auf den ersten Schraubenabschnitt (13, 43, 73, 213, 243) die Lagerfläche (22b, 52b, 82b, 222b, 252b) an die Anlagefläche (14, 44, 74, 214, 244) drückt,
wobei die Anlagefläche (14, 44, 74, 214, 244) und die Kontaktfläche (22a, 52a, 82a, 222a, 252a) zu einer Druckrichtung der Lagerfläche (22b, 52b, 82b, 222b, 252b) geneigt sind,
**dadurch gekennzeichnet, dass** ein Neigungswinkel (θ1) der Anlagefläche (14, 44, 74, 214, 244) relativ zu der Druckrichtung größer ist als ein Neigungswinkel (θ2) der Kontaktfläche (22a, 52a, 82a, 222a, 252a) relativ zu der Druckrichtung.

2. Verbindungsstruktur für den Kraftstoffdrucksensor (106) nach Anspruch 1, wobei
die Schraubenmutter (30, 60, 90, 230, 260, 270) eine zylindrische Form aufweist, die an ihrem einen Ende einen Öffnungsabschnitt (31, 91, 231, 261), in den der Befestigungsvorsprung (10, 40, 70, 210, 240) eingeführt wird, und an ihrem anderen Ende ein Durchgangsloch (32, 62, 92, 232, 262, 272), durch das der Befestigungsabschnitt (20, 50, 80, 220, 250) eindringt, umfasst, und wobei der Druckabschnitt (34, 64, 94, 234, 264) in einem Umfang des Durchgangslochs (32, 62, 92, 232, 262, 272) ausgebildet ist,
der erste Schraubenabschnitt (13, 43, 73, 213, 243) in einer äußeren Umfangsfläche des Befestigungsvorsprungs (10, 40, 70, 210, 240) ausgebildet ist, und
der zweite Schraubenabschnitt (23, 63, 93, 233, 263) in einer inneren Umfangsfläche der Schraubenmutter (30, 60, 90, 230, 260, 270) ausgebildet ist.

3. Verbindungsstruktur für den Kraftstoffdrucksensor (106) nach Anspruch 2, wobei
das Durchgangsloch (32, 62, 92, 232, 262, 272) einen Innendurchmesser aufweist, der größer ist als ein maximaler Außendurchmesser des Befestigungsabschnitts (20, 50, 80, 220, 250), und
eine Vielzahl von geteilten Manschetten (95), die in einer Umfangsrichtung nebeneinander angeordnet sind, zwischen dem Druckabschnitt (34, 64, 94, 234, 264) und der Lagerfläche (22b, 52b, 82b, 222b, 252b) vorgesehen sind.

4. Verbindungsstruktur für den Kraftstoffdrucksensor (106) nach Anspruch 3, wobei
die geteilte Manschette (95) einen rohrförmigen Abschnitt (95a), der eine äußere Umfangsfläche des Befestigungsabschnitts (20, 50, 80, 220, 250) bedeckt, und einen Flanschabschnitt (95b), der von einer äußeren Umfangsfläche des rohrförmigen Abschnitts (95a) vorsteht und zwischen dem Druckabschnitt (34, 64, 94, 234, 264) und der Lagerfläche (22b, 52b, 82b, 222b, 252b) liegt, umfasst.

5. Verbindungsstruktur für den Kraftstoffdrucksensor (106) nach Anspruch 2, wobei
der zweite Schraubenabschnitt (23, 63, 93, 233, 263) in einem Bereich von einem Ende der Schraubenmutter (30, 60, 90, 230, 260, 270) bis zu einer Zwischenposition in axialer Richtung ausgebildet ist,
die Schraubenmutter (30, 60, 90, 230, 260, 270) in einem Bereich von dem anderen Ende bis zu einem Drehteilabschnitt (X), in dem der zweite Schraubenabschnitt (23, 63, 93, 233, 263) ausgebildet ist, einen Stauchabschnitt (Y) aufweist, der eine Dicke (W5) aufweist, die dünner ist als die des Drehteilabschnitts (X), und der in einer Innendurchmesserrichtung elastisch verformt ist, und
das Durchgangsloch (32, 62, 92, 232, 262, 272) durch Verkleinern eines Öffnungsabschnitts (31, 91, 231, 261) mit einer Größe, in die der Befestigungsabschnitt (20, 50, 80, 220, 250) eingeführt wird, auf eine Größe geformt wird, die den Befestigungsabschnitt (20, 50, 80, 220, 250) mit elastischer Verformung des Stauchabschnitts (Y) hält.

6. Verbindungsstruktur für den Kraftstoffdrucksensor (106) nach Anspruch 1, wobei
der Befestigungsvorsprung (10, 40, 70, 210, 240) einen konkaven Abschnitt (45) aufweist, in den der Befestigungsabschnitt (20, 50, 80, 220, 250) und die Schraubenmutter (30, 60, 90, 230, 260, 270) eingesetzt sind [0044], wobei der konkave Abschnitt (45) eine innere Umfangsfläche, in der der erste Schraubenabschnitt (13, 43, 73, 213, 243) ausgebildet ist, und eine die Anschlagfläche (14, 44, 74, 214, 244) umfassende Bodenfläche aufweist, und
die Schraubenmutter (30, 60, 90, 230, 260, 270) eine zylindrische Form aufweist, durch die der Befestigungsabschnitt (20, 50, 80, 220, 250) dringt, wobei die Schraubenmutter (30, 60, 90, 230, 260, 270) eine äußere Umfangsfläche, in der der zweite Schraubenabschnitt (23, 63, 93, 233, 263) ausgebildet ist, und ein in den konkaven Abschnitt (45) eingesetztes vorderes Ende aufweist, wobei das vordere Ende den Druckabschnitt (34, 64, 94, 234, 264) aufweist.

## Revendications

1. Structure de connexion pour un capteur de pression de carburant (106) qui connecte un capteur de pression de carburant (106) pour détecter une pression de carburant à une rampe de carburant (103) dans laquelle circule le carburant à fournir à un moteur à combustion interne, la structure de connexion comprenant:
un bossage de fixation tubulaire (10, 40, 70, 210, 240) qui est formé dans la rampe de carburant (103) et comprend une première partie vissée (13, 43, 73, 213, 243) et une surface de butée (14, 44, 74, 214, 244);
une partie de fixation (20, 50, 80, 220, 250) qui est prévue dans un corps de capteur (106a) du capteur de pression de carburant (106), et comprend une surface de contact (22a, 52a, 82a, 222a, 252a) qui bute contre la surface de butée (14, 44, 74, 214, 244) et une surface d'appui (22b, 52b, 82b, 222b, 252b) prévue derrière la surface de contact (22a, 52a, 82a, 222a, 252a); et
un écrou (30, 60, 90, 230, 260, 270) comprenant une deuxième partie de vis (23, 63, 93, 233, 263) qui est vissée sur la première partie de vis (13, 43, 73, 213, 243) et une partie de pression (34, 64, 94, 234, 264) qui presse la surface d'appui (22b, 52b, 82b, 222b, 252b) sur la surface de butée (14, 44, 74, 214, 244) en vissant la deuxième partie de vis (23, 63, 93, 233, 263) sur la première partie de vis (13, 43, 73, 213, 243),
dans lequel la surface de butée (14, 44, 74, 214, 244) et la surface de contact (22a, 52a, 82a, 222a, 252a) sont inclinées vers une direction de pression de la surface d'appui (22b, 52b, 82b, 222b, 252b),
**caractérisé en ce qu'**un angle d'inclinaison (θ1) de la surface de butée (14, 44, 74, 214, 244) par rapport à la direction de pression est plus grand qu'un angle d'inclinaison (θ2) de la surface de contact (22a, 52a, 82a, 222a, 252a) par rapport à la direction de pression.

2. Structure de connexion pour le capteur de pression de carburant (106) selon la revendication 1, dans laquelle
l'écrou (30, 60, 90, 230, 260, 270) a une forme cylindrique comprenant à une extrémité une partie d'ouverture (31, 91, 231, 261) dans laquelle est inséré le bossage de fixation (10, 40, 70, 210, 240) est inséré et à l'autre extrémité un trou traversant (32, 62, 92, 232, 262, 272) à travers lequel la partie de fixation (20, 50, 80, 220, 250) pénètre, et la partie de pression (34, 64, 94, 234, 264) étant formée dans une périphérie du trou traversant (32, 62, 92, 232, 262, 272),
la première partie de vis (13, 43, 73, 213, 243) est formée dans une surface périphérique extérieure du bossage de fixation (10, 40, 70, 210, 240), et
la deuxième partie de vis (23, 63, 93, 233, 263) est formée dans une surface périphérique interne de l'écrou (30, 60, 90, 230, 260, 270).

3. Structure de connexion pour le capteur de pression de carburant (106) selon la revendication 2, dans laquelle
le trou traversant (32, 62, 92, 232, 262, 272) a un diamètre intérieur supérieur au diamètre extérieur maximal de la partie de fixation (20, 50, 80, 220, 250), et
plusieurs colliers divisés (95) disposés côte à côte dans le sens de la circonférence sont prévus entre la partie de pression (34, 64, 94, 234, 264) et la surface d'appui (22b, 52b, 82b, 222b, 252b).

4. Structure de connexion pour le capteur de pression de carburant (106) selon la revendication 3, dans laquelle
Le collier divisé (95) comprend une partie tubulaire (95a) qui recouvre une surface périphérique extérieure de la partie de fixation (20, 50, 80, 220, 250) et une partie de bride (95b) qui fait saillie à partir d'une surface périphérique extérieure de la partie tubulaire (95a) et est prise en sandwich entre la partie de pression (34, 64, 94, 234, 264) et la surface d'appui (22b, 52b, 82b, 222b, 252b).

5. Structure de connexion pour le capteur de pression de carburant (106) selon la revendication 2, dans laquelle
la deuxième partie de vis (23, 63, 93, 233, 263) est formée dans une région allant d'une extrémité de l'écrou (30, 60, 90, 230, 260, 270) à une position intermédiaire dans une direction axiale,
l'écrou (30, 60, 90, 230, 260, 270) comprend, dans une zone allant de l'autre extrémité à une partie usinée de la vis (X) dans laquelle la deuxième partie de vis (23, 63, 93, 233, 263) est formée, une partie de rétreint (Y) qui a une épaisseur (W5) plus fine que celle de la partie usinée de la vis (X) et qui est déformée élastiquement dans une direction de diamètre intérieur, et
le trou traversant (32, 62, 92, 232, 262, 272) est formé en réduisant une partie d'ouverture (31, 91, 231, 261) ayant une taille dans laquelle la partie de fixation (20, 50, 80, 220, 250) est insérée, à une taille qui retient la partie de fixation (20, 50, 80, 220, 250) avec une déformation élastique de la partie de sertissage (Y).

6. Structure de connexion pour le capteur de pression de carburant (106) selon la revendication 1, dans laquelle
le bossage de fixation (10, 40, 70, 210, 240) comprend une partie concave (45) dans laquelle la partie de fixation (20, 50, 80, 220, 250) et l'écrou (30, 60, 90, 230, 260, 270) sont insérés [0044], la partie concave (45) comprenant une surface périphérique intérieure dans laquelle la première partie de vis (13, 43, 73, 213, 243) est formée et une surface inférieure ayant la surface de butée (14, 44, 74, 214, 244), et
l'écrou (30, 60, 90, 230, 260, 270) comprend une forme cylindrique à travers laquelle pénètre la partie de fixation (20, 50, 80, 220, 250), l'écrou (30, 60, 90, 230, 260, 270) comprenant une surface périphérique extérieure dans laquelle la deuxième partie de vis (23, 63, 93, 233, 263) est formée, et une extrémité avant insérée dans la partie concave (45), l'extrémité avant comportant la partie de pression (34, 64, 94, 234, 264).
